# EUROPEAN PATENT APPLICATION

(11) **EP 3 771 703 A1**
(43) Date of publication of application: **03.02.2021**
(21) Application number: 18914211.0
(22) Date of filing: 14.08.2018
(51) Int. Cl.: C05G 3/00

(54) **FERTILIZER ANTI-CAKING AGENT, PREPARATION METHOD THEREFOR AND APPLICATION THEREOF**

(30) Priority: 10.04.2018 CN 201810317209
(71) Applicant: Hubei Forbon Technology Co., Ltd., Yingcheng, Hubei 432400 (CN)
(72) Inventor: WANG, Renzong, Yingcheng, Hubei 432400 (CN); YANG, Huiping, Yingcheng, Hubei 432400 (CN); TIAN, Nan, Yingcheng, Hubei 432400 (CN); LI, Shuhua, Yingcheng, Hubei 432400 (CN)
(74) Representative: Hellmich, Wolfgang
(86) International application number: PCT/CN2018/100357
(87) International publication number: WO 2019/196289

(57) **Abstract**

The present invention discloses a fertilizer anti-caking agent and its preparation method and application. The fertilizer anti-caking agent, calculated by mass percentage, includes 10%-20% of C8-C20 fatty acid, 3%-5% of C12-C20 natural fatty alcohol, 5%-10% of nanometer silica powder, and 65%-82% of plant natural straw, wherein a sum of the fatty acid, the natural fatty alcohol, the nanometer silica powder and the plant natural straw is 100%. The fertilizer anti-caking agent is obtained by secondary modification and primary compounding. While being used, the fertilizer anti-caking agent is evenly coated on the surface of fertilizer particles according to the dosage of 2.5 kg to 4.0 kg of the fertilizer anti-caking agent per ton of the fertilizer with a screw conveyor. The fertilizer anti-caking agent can form a layer of film on the surface of fertilizer particles, so that the fertilizer remains loose for a long time and has good fluidity, thereby ensuring the quality of the fertilizer.

## Description

### Field of Invention

The present invention relates to the field of fertilizer anti-caking treatment technology, and more particularly to a fertilizer anti-caking agent and its preparation method and application.

### Description of Related Arts

### (1) Overview of anti-caking agents

Anti-caking agents are additives for maintaining good flowability of fertilizers during storage and handling operations. In order to prevent agglomeration of fertilizers, fertilizer manufacturers mainly coat anti-caking agents on fertilizers while improving process conditions and controlling fertilizer particle characteristics. The use of anti-caking agents can minimize the phenomena of fertilizer agglomeration, moisture absorption and pulverization, increase the fluidity of fertilizer particles, and facilitate the storage, transportation and use of fertilizers. Therefore, as a low-cost, high-yield anti-caking measure, anti-caking agents have now been widely accepted and used by compound fertilizer manufacturers worldwide.

### (2) Current status of anti-caking agents

At present, there are many types of compound fertilizer anti-caking agents on the Chinese market, which are mainly oily and powdery depending on the base material.

Oily anti-caking agents are mostly coated on the surface of the fertilizer for forming a layer of hydrophobic protective film, so as to reduce the interaction between fertilizer particles. Traditional oily anti-caking agents are usually petroleum products such as mineral oils and alkylamines. Mineral oil is the most widely used anti-caking agent due to stable performance and good hydrophobicity, but it is high in cost and is not easy to be degraded. Due to the corrosion of alkylamine on the surface of the fertilizer, the amount of alkylamine cannot be too large, and the cost is also relatively high.

The powdery anti-caking agent is an ultra-fine powder obtained by modifying and grinding non-metallic ores such as diatomite and kaolin, and talcum powder and other inert powders, which adheres to the surface of fertilizer particles and plays a role of mechanical isolation to prevent the fertilizer from agglomeration. The main carrier of the powdery anti-caking agent is non-metallic ore which is insoluble in water and unable to be degraded, causing a relatively large impact on the environment. At the same time, the inert powder has a poor effect due to poor adhesion.

### (3) Application of anti-caking agents

At present, fertilizer manufacturers generally use the two-step method of oil and powder to wrap fertilizer particles, so that the effect of preventing agglomeration is satisfied, and however, the big problem is that the mineral oil powders are unable to adhere well to the surface of fertilizer particles, or are unable to wrap fertilizer particles, or are easy to fall off after wrapping fertilizer particles. These are also the phenomena that people often see the powders falling off and peeling on the surface of fertilizers. In this case, the anti-caking and isolation effect of powders on fertilizers is greatly reduced, and the overall anti-caking effect is unable to be guaranteed. Therefore, petroleum products such as mineral oils and alkylamines are no longer able to meet current environmental protection requirements.

### SUMMARY OF THE PRESENT INVENTION

An object of the present invention is to overcome shortcomings of the prior art and meet the market need for anti-caking fertilizers, so that a fertilizer anti-caking agent and its preparation method and application are provided. The fertilizer anti-caking agent provided by the present invention is prepared by using a natural plant straw as a carrier, and performs wrapping on natural plant straw powder with nanometer silica powder for firstly modifying, so that the natural plant straw is changed from hydrophilic to hydrophobic. The present invention utilizes the ductility of the nanometer silica powder to improve the spreading ability of the natural plant straw powder; utilizes the mixture of the fatty acid with the natural fatty alcohol for secondly modifying, so as to decrease the melting point of the natural plant straw powder modified by the nanometer silica powder, and enhance the powder viscosity; utilizes sugar and fiber in the natural plant straw to effectively adhere to the surface of the fertilizer, so that the adhesion effect of the surface of the fertilizer is achieved when the powder wraps the fertilizer, avoid the powder falling on the surface of the fertilizer.

To solve the above technical problem, the present invention provides technical solutions as follows.

A fertilizer anti-caking agent, calculated by mass percentage, comprises 10%-20% of C8-C20 fatty acid, 3%-5% of C12-C20 natural fatty alcohol, 5%-10% of nanometer silica powder, and 65%-82% of plant natural straw, wherein a sum of the fatty acid, the natural fatty alcohol, the nanometer silica powder and the plant natural straw is 100%.

Preferably, the plant natural straw is at least one member selected from the group consisting of wheat straw, rice straw, corn straw, rape straw, cotton straw and sugarcane straw.

Preferably, in the plant natural straw, a moisture content is not higher than 2.0%, a primary particle size of D90 is in a range of 20 to 50 µm.

Preferably, in the nanometer silica powder, a nanometer silica content is not lower than 98.0%, a primary particle size of D90 is in a range of 50 to 100 nm.

A preparation method of the fertilizer anti-caking agent comprises steps of:
(1) firstly modifying, which comprises: performing a first surface wrapping on the plant natural straw in a stock bin with the nanometer silica powder through a modifying machine according to the mass percentage, and obtaining a modified plant natural straw powder;
(2) compounding, which comprises: adding the C8-C20 fatty acid according to the mass percentage to a reaction kettle equipped with a stirring device, adding the C12-C20 natural fatty alcohol according to the mass percentage after heating the reaction kettle to 60-70 °C, evenly stirring, and obtaining a mixture;
(3) secondly modifying, which comprises: performing a second surface wrapping on the modified plant natural straw powder obtained by the step (1) with the mixture obtained by the step (2), and obtaining a modified powder; and
(4) activating and stabilizing the modified powder, which comprises: cooling the modified powder obtained by secondly modifying to room temperature, standing for 8-10 hours in a sealed condition, and finally obtaining the fertilizer anti-caking agent.

Preferably, the step of heating the reaction kettle is steam heating, water bath heating or electric heating.

Preferably, the fertilizer anti-caking agent is evenly wrapped on a surface of fertilizer according to a dosage of 2.5 kg to 4.0 kg of the fertilizer anti-caking agent per ton of the fertilizer.

Preferably, the fertilizer anti-caking agent is wrapped on the surface of the fertilizer in a manner that the fertilizer anti-caking agent is directly evenly coated on the surface of fertilizer particles.

Preferably, the fertilizer anti-caking agent is evenly coated on the surface of the fertilizer particles with a screw conveyor.

The fertilizer anti-caking agent, prepared by taking the natural plant straw as a raw material, can improve the farmland ecological environment to varying degrees, and has the effect of improving soil and improving the farmland ecological environment. For example, it can maintain and regulate the temperature and humidity in the field. Moreover, the straw contains a large amount of organic matters, nitrogen phosphorus potassium and trace elements, which is an important organic fertilizer source for agricultural production, thereby improving the fertilizer efficiency.

The fertilizer anti-caking agent, prepared by taking the natural plant straw as a raw material, has degradability and regeneration. By wrapping on the surface of fertilizer, a film is formed on the surface of fertilizer particles for effectively isolating from the air, reducing the rate of water absorption of fertilizer particles, reducing the adhesion between fertilizer particles, inhibiting the salt dissolution - recrystallization between fertilizer particles, thereby inhibiting the fertilizer from agglomerating. Therefore, the fertilizer anti-caking agent provided by the present invention solves the agglomeration of the fertilizer without affecting the environment, and has a good regulation effect on the soil.

The fertilizer anti-caking agent provided by the present invention has the characteristics of preventing the fertilizer from agglomerating, improving the farmland ecological environment, enhancing the fertilizer efficiency, and natural environmental protection and degradability.

### DETAILED DESCRIPTION OF THE PREFERRED EMBODIMENT

The present invention is further described in detail with reference to the embodiments as follows. The raw materials used in the present invention are all directly purchased, in which C8-C20 fatty acid, and C12-C20 natural fatty alcohol used in the embodiments of the present invention are purchased from Singapore Harvest International Co., Ltd. Yihai Kerry Group, nanometer silica powder is purchased from Nanjing Tianxing Chemical Material Co., Ltd. China, and the plant natural straw is purchased from Shandong Agricultural Materials Company, China.

### First Embodiment:

A fertilizer anti-caking agent, calculated by mass percentage, comprises 10% of C8 fatty acid, 3% of C12 natural fatty alcohol, 5% of nanometer silica powder, and 82% of corn straw, wherein: in the nanometer silica powder, the nanometer silica content is 98% and the primary particle size of D90 is 50 nm; in the corn straw, the moisture content is 2.0% and the primary particle size of D90 is 20 µm.

A preparation method of the fertilizer anti-caking agent comprises steps of: performing a first surface wrapping on the corn straw in a stock bin with the nanometer silica powder through a modifying machine according to the mass percentage for firstly modifying, obtaining a modified corn straw powder; adding the C8 fatty acid according to the mass percentage to a reaction kettle equipped with a stirring device, adding the C12 natural fatty alcohol according to the mass percentage after heating the reaction kettle to 60 °C, evenly stirring, obtaining a mixture; performing a second surface wrapping on the modified corn straw powder with the mixture for secondly modifying, obtaining a modified powder; and cooling the modified powder obtained by secondly modifying to room temperature, standing for 8 hours in a sealed condition, and finally obtaining the fertilizer anti-caking agent.

The step of heating the reaction kettle is steam heating, of course, water bath heating or electric heating is also able to be used.

The obtained fertilizer anti-caking agent is uniformly wrapped on the surface of the fertilizer with a screw conveyor according to the dosage of 4.0 kg of fertilizer anti-caking agent per ton of fertilizer, which has the significant anti-caking effect on fertilizers.

| | Hygroscopic Rate (%) | Crushing Pressure (N) | Loose Degree (%) |
|---|---|---|---|
| Fertilizer after being wrapped | 26.84 | 34 | 96.24 |
| Fertilizer before being wrapped | 73.25 | 153 | 28.72 |

### Second Embodiment:

A fertilizer anti-caking agent, calculated by mass percentage, comprises 15% of C20 fatty acid, 4% of C20 natural fatty alcohol, 7% of nanometer silica powder, and 74% of wheat straw, wherein: in the nanometer silica powder, the nanometer silica content is 98.5% and the primary particle size of D90 is 70 nm; in the wheat straw, the moisture content is 1.8% and the primary particle size of D90 is 30 µm.

A preparation method of the fertilizer anti-caking agent comprises steps of: performing a first surface wrapping on the wheat straw in a stock bin with the nanometer silica powder through a modifying machine according to the mass percentage for firstly modifying, obtaining a modified wheat straw powder; adding the C20 fatty acid according to the mass percentage to a reaction kettle equipped with a stirring device, adding the C20 natural fatty alcohol according to the mass percentage after heating the reaction kettle to 65 °C, evenly stirring, obtaining a mixture; performing a second surface wrapping on the modified wheat straw powder with the mixture for secondly modifying, obtaining a modified powder; and cooling the modified powder obtained by secondly modifying to room temperature, standing for 9 hours in a sealed condition, and finally obtaining the fertilizer anti-caking agent.

The step of heating the reaction kettle is steam heating, of course, water bath heating or electric heating is also able to be used.

The obtained fertilizer anti-caking agent is uniformly wrapped on the surface of the fertilizer with a screw conveyor according to the dosage of 3.0 kg of fertilizer anti-caking agent per ton of fertilizer, which has the significant anti-caking effect on fertilizers.

| | Hygroscopic Rate (%) | Crushing Pressure (N) | Loose Degree (%) |
|---|---|---|---|
| Fertilizer after being wrapped | 28.39 | 39 | 94.24 |
| Fertilizer before being wrapped | 73.52 | 148 | 27.28 |

### Third Embodiment:

A fertilizer anti-caking agent, calculated by mass percentage, comprises 20% of C16 fatty acid, 5% of C14 natural fatty alcohol, 10% of nanometer silica powder, and 65% of cotton straw, wherein: in the nanometer silica powder, the nanometer silica content is 99% and the primary particle size of D90 is 100 nm; in the cotton straw, the moisture content is 1.6% and the primary particle size of D90 is 50 µm.

A preparation method of the fertilizer anti-caking agent comprises steps of: performing a first surface wrapping on the cotton straw in a stock bin with the nanometer silica powder through a modifying machine according to the mass percentage for firstly modifying, obtaining a modified cotton straw powder; adding the C16 fatty acid according to the mass percentage to a reaction kettle equipped with a stirring device, adding the C14 natural fatty alcohol according to the mass percentage after heating the reaction kettle to 70 °C, evenly stirring, obtaining a mixture; performing a second surface wrapping on the modified cotton straw powder with the mixture for secondly modifying, obtaining a modified powder; and cooling the modified powder obtained by secondly modifying to room temperature, standing for 10 hours in a sealed condition, and finally obtaining the fertilizer anti-caking agent.

The step of heating the reaction kettle is steam heating, of course, water bath heating or electric heating is also able to be used.

The obtained fertilizer anti-caking agent is uniformly wrapped on the surface of the fertilizer with a screw conveyor according to the dosage of 2.5 kg of fertilizer anti-caking agent per ton of fertilizer, which has the significant anti-caking effect on fertilizers.

| | Hygroscopic Rate (%) | Crushing Pressure (N) | Loose Degree (%) |
|---|---|---|---|
| Fertilizer after being wrapped | 28.81 | 42 | 95.43 |
| Fertilizer before being wrapped | 73.45 | 157 | 27.94 |

### Fourth Embodiment:

A fertilizer anti-caking agent, calculated by mass percentage, comprises 12% of C14 fatty acid, 5% of C18 natural fatty alcohol, 10% of nanometer silica powder, and 73% of cotton straw and sugarcane straw, wherein: in the nanometer silica powder, the nanometer silica content is 98% and the primary particle size of D90 is 100 nm; in the cotton straw and sugarcane straw, the moisture content is 1.5% and the primary particle size of D90 is 40 µm.

A preparation method of the fertilizer anti-caking agent comprises steps of: performing a first surface wrapping on the cotton straw and sugarcane straw in a stock bin with the nanometer silica powder through a modifying machine according to the mass percentage for firstly modifying, obtaining a modified cotton straw and sugarcane straw powder; adding the C14 fatty acid according to the mass percentage to a reaction kettle equipped with a stirring device, adding the C18 natural fatty alcohol according to the mass percentage after heating the reaction kettle to 70 °C, evenly stirring, obtaining a mixture; performing a second surface wrapping on the modified cotton straw and sugarcane straw powder with the mixture for secondly modifying, obtaining a modified powder; and cooling the modified powder obtained by secondly modifying to room temperature, standing for 8.5 hours in a sealed condition, and finally obtaining the fertilizer anti-caking agent.

The step of heating the reaction kettle is steam heating, of course, water bath heating or electric heating is also able to be used.

The obtained fertilizer anti-caking agent is uniformly wrapped on the surface of the fertilizer with a screw conveyor according to the dosage of 3.5 kg of fertilizer anti-caking agent per ton of fertilizer, which has the significant anti-caking effect on fertilizers.

| | Hygroscopic Rate (%) | Crushing Pressure (N) | Loose Degree (%) |
|---|---|---|---|
| Fertilizer after being wrapped | 25.88 | 29 | 97.20 |
| Fertilizer before being wrapped | 74.12 | 147 | 27.96 |

### Fifth Embodiment:

A fertilizer anti-caking agent, calculated by mass percentage, comprises 12.5% of C12 fatty acid, 4.5% of C16 natural fatty alcohol, 9% of nanometer silica powder, and 74% of rice straw, rape straw and corn straw, wherein: in the nanometer silica powder, the nanometer silica content is 98.5% and the primary particle size of D90 is 80 nm; in the rice straw, rape straw and corn straw, the moisture content is 1.75% and the primary particle size of D90 is 50 µm.

A preparation method of the fertilizer anti-caking agent comprises steps of: performing a first surface wrapping on the rice straw, rape straw and corn straw in a stock bin with the nanometer silica powder through a modifying machine according to the mass percentage for firstly modifying, obtaining a modified rice straw, rape straw and corn straw powder; adding the C12 fatty acid according to the mass percentage to a reaction kettle equipped with a stirring device, adding the C16 natural fatty alcohol according to the mass percentage after heating the reaction kettle to 70 °C, evenly stirring, obtaining a mixture; performing a second surface wrapping on the modified rice straw, rape straw and corn straw powder with the mixture for secondly modifying, obtaining a modified powder; and cooling the modified powder obtained by secondly modifying to room temperature, standing for 9.5 hours in a sealed condition, and finally obtaining the fertilizer anti-caking agent.

The step of heating the reaction kettle is steam heating, of course, water bath heating or electric heating is also able to be used.

The obtained fertilizer anti-caking agent is uniformly wrapped on the surface of the fertilizer with a screw conveyor according to the dosage of 3.0 kg of fertilizer anti-caking agent per ton of fertilizer, which has the significant anti-caking effect on fertilizers.

| | Hygroscopic Rate (%) | Crushing Pressure (N) | Loose Degree (%) |
|---|---|---|---|
| Fertilizer after being wrapped | 25.94 | 41 | 97.07 |
| Fertilizer before being wrapped | 73.25 | 159 | 28.81 |

## Claims

1. A fertilizer anti-caking agent, calculated by mass percentage, which comprises 10%-20% of C8-C20 fatty acid, 3%-5% of C12-C20 natural fatty alcohol, 5%-10% of nanometer silica powder, and 65%-82% of plant natural straw, wherein a sum of the fatty acid, the natural fatty alcohol, the nanometer silica powder and the plant natural straw is 100%.

2. The fertilizer anti-caking agent, as recited in claim 1, wherein the plant natural straw is at least one member selected from the group consisting of wheat straw, rice straw, corn straw, rape straw, cotton straw and sugarcane straw.

3. The fertilizer anti-caking agent, as recited in claim 1 or 2, wherein in the plant natural straw, a moisture content is not higher than 2.0%, a primary particle size of D90 is in a range of 20 to 50 µm.

4. The fertilizer anti-caking agent, as recited in claim 1, wherein in the nanometer silica powder, a nanometer silica content is not lower than 98.0%, a primary particle size of D90 is in a range of 50 to 100 nm.

5. A preparation method of the fertilizer anti-caking agent, as recited in any one of claims 1 to 4, wherein the preparation method comprises steps of:
(1) firstly modifying, which comprises: performing a first surface wrapping on the plant natural straw in a stock bin with the nanometer silica powder through a modifying machine according to the mass percentage, and obtaining a modified plant natural straw powder;
(2) compounding, which comprises: adding the C8-C20 fatty acid according to the mass percentage to a reaction kettle equipped with a stirring device, adding the C12-C20 natural fatty alcohol according to the mass percentage after heating the reaction kettle to 60-70 °C, evenly stirring, and obtaining a mixture;
(3) secondly modifying, which comprises: performing a second surface wrapping on the modified plant natural straw powder obtained by the step (1) with the mixture obtained by the step (2), and obtaining a modified powder; and
(4) activating and stabilizing the modified powder, which comprises: cooling the modified powder obtained by secondly modifying to room temperature, standing for 8-10 hours in a sealed condition, and finally obtaining the fertilizer anti-caking agent.

6. The preparation method of the fertilizer anti-caking agent, as recited in claim 5, wherein: the step of heating the reaction kettle is steam heating, water bath heating or electric heating.

7. An application of the fertilizer anti-caking agent as recited in any one of claims 1 to 4, which comprises uniformly wrapping the fertilizer anti-caking agent on a surface of fertilizer according to a dosage of 2.5 kg to 4.0 kg of the fertilizer anti-caking agent per ton of the fertilizer.

8. The application of the fertilizer anti-caking agent, as recited in claim 7, wherein the fertilizer anti-caking agent is wrapped on the surface of the fertilizer in a manner that the fertilizer anti-caking agent is directly evenly coated on the surface of fertilizer particles.

9. The application of the fertilizer anti-caking agent, as recited in claim 8, wherein the fertilizer anti-caking agent is evenly coated on the surface of the fertilizer particles with a screw conveyor.
